# EUROPÄISCHE PATENTANMELDUNG

(11) **EP 1 288 528 A2**
(43) Veröffentlichungstag der Anmeldung: **05.03.2003**
(21) Anmeldenummer: 02015274.0
(22) Anmeldetag: 09.07.2002
(51) Int. Cl.: F16H 15/38

(54) **Reibscheibe für ein Toroid-Reibradgetriebe**

(30) Priorität: 31.08.2001 DE 10142672
(71) Anmelder: Bayerische Motoren Werke Aktiengesellschaft, 80809 München (DE)
(72) Erfinder: Ohnemus, Ulrich, 82285 Hattenhofen (DE)

(57) **Zusammenfassung**

Die Erfindung beschreibt eine Reibscheibe für ein Toroid-Reibradgetriebe, die das Drehmoment einer Antriebsscheibe auf eine Abtriebsscheibe überträgt. Dabei verhindert ein Traktionsfluid den direkten mechanischen Kontakt zwischen der Lauffläche (3) der Reibscheibe (1) und der Antriebs- bzw. Abtriebsscheibe. Um die Wärmebelastung an dieser Stellung zu verringern, wird die Reibscheibe durch eine Ölstrom gekühlt, der an die Scheibenflanke (4) gespritzt wird. Um den Ölstrom möglichst lange an der Reibscheibe, insbesondere im Laufflächenbereich zu halten, ist dort eine Hohlkehle (7,7') vorgesehen. Erzeugt wird diese Hohlkehle durch Rippen, die im Anschluss an die Lauffläche ausgeformt sind.

## Beschreibung

Die Erfindung bezieht sich auf eine Reibscheibe für ein Toroid-Reibradgetriebe, wie sie im Oberbegriff des Hauptanspruchs beschrieben ist.

Toroid-Reibradgetriebe der hier behandelten Art weisen eine stufenlose Übersetzungsverstellung auf. Hierfür ist ein Variator vorgesehen mit in der Regel mehreren Reibradstufen. Jede Reibradstufe besteht aus einer Antriebs- und einer Abtriebsscheibe und mehreren, vorzugsweise drei Reibscheiben, die dazwischen laufen. Die Aufgabe der Reibscheiben ist es, durch die Sicherstellung der Traktion an den Kontaktflächen das Drehmoment von der Antriebsscheibe zu der Abtriebsscheibe weiterzuleiten. Je nach Winkellage der Reibscheiben in den torusförmigen Hohlräumen ergeben sich bestimmte Kontaktradien an den An- und Abtriebsscheiben, die ihrerseits das Übersetzungsverhältnis zwischen An- und Abtrieb kennzeichnen.

Aus Geräusch- und Verschleißgründen soll die reibschlüssige Übertragung des Drehmoments ohne direkten mechanischen Kontakt zwischen Reibscheibe und An- bzw. Abtriebsscheiben erfolgen. Aus diesen Gründen wird ein Traktionsfluid eingesetzt, das als Ölfilm die Kontaktflächen zwischen den Reibscheiben und den An- und Abtriebsscheiben trennt. Im Traktionsfluid werden durch die an den Kontaktflächen auftretenden Druckkräfte Scherkräfte erzeugt, die wiederum die Weitergabe von Umfangskräften bzw. Drehmomenten bewirken. Werden jedoch im Traktionsfluid die maximal ertragbaren Temperaturen überschritten, reißt in der Kontaktfläche der trennende Ölfilm ab und dies führt zum Schadensfall.

Aus der WO 97/37156 wird diesem Problem bei einer gattungsgemäßen Reibscheibe dadurch begegnet, in dem ihre mit den Scheiben zusammenwirkende Lauffläche gekühlt wird. Dabei wird Traktionsflüssigkeit von einem Sammelbehälter abgetrennt, durch den Träger der Reibscheibe geführt und auf die Lauffläche der Reibscheibe gespritzt.

In anderen bekannten Ausführungen wird das Öl nicht direkt auf die Lauffläche, sondern an die Flanken angespritzt und durch die Fliehkraft der sich schnell drehenden Reibscheiben zur radial außenliegenden Lauffläche transportiert. Die Querschnittsform der in diesem Fall eingesetzten Reibscheiben sind dabei so gewählt, dass sich eine ballige Lauffläche ergibt und der Übergang zu den Flanken gefast ist.

Aufgabe der Erfindung ist es, eine gattungsgemäße Reibscheibe so weiterzubilden, dass sich die Temperatur im Kontaktbereich zwischen der Lauffläche der Reibscheibe und der An- und Abtriebsscheibe nicht übermäßig erhöht.

Die Aufgabe wird erfindungsgemäß mit den kennzeichnenden Merkmalen des Anspruchs 1 gelöst. Weitere Ausgestaltungen der Erfindung ergeben sich aus den Unteransprüchen.

Nach der Erfindung wird demnach an der Stirnseite der Reibscheibe im Anschluss an die Lauffläche eine zurückweichende Rippe angeformt mit einer Hohlkehle an der der Lauffläche abgewandten Rückseite, in die das Kühlmittel gespritzt bzw. durch Fliehkraft transportiert wird. Der Fluss des Kühlmittels in Richtung Stirnfläche wird dadurch gebremst bzw. in einer vorteilhaften Ausführung sogar umgeleitet. Dadurch verweilt es länger an der Flanke der Reibescheibe und kann so mehr Wärme aufnehmen mit der Folge, dass die Wärmeabfuhr im Kontaktflächenbereich vergrößert wird.

In einer vorteilhaften Ausführung weist die Hohlkehle eine Hinterschneidung auf. Dadurch wir die Kühlflüssigkeit - wie bereits erwähnt - entgegen der auf sie wirkenden Fliehkraft zu einer Bewegungsumkehr gezwungen, was zu der besagten Steigerung der Verweildauer in der Hohlkehle führt.

Ganz allgemein zeigt sich, dass durch die effektivere Wärmeableitung möglichst nahe am Kontaktpunkt Traktionsverluste durch nicht ausreichende Wärmeabfuhr vermieden werden können. Es lässt sich der Betriebsbereich des Variators vergrößern und die Druckspannungsverhältnisse im Reibscheiben-Randzonenbereich verbessern. Schließlich erlaubt die erfinderische Maßnahme eine kosten- und wirkungsgradgünstige Optimierung der Kühlung sowohl der Reibscheiben als auch der An- bzw. Abtriebsscheiben mit den positiven Folgen einer erhöhten Standfestigkeit des Getriebes.

Weiter vorteilhafte Ausgestaltungen der Erfindung ergeben sich aus der nachfolgenden Beschreibung anhand der dazugehörenden Zeichnung. Es zeigen
- Figur 1: eine Reibscheibe nach dem Stand der Technik,
- Figur 2: eine Querschnittsdarstellung der oberen Scheibenhälfte einer ersten Ausführungsform der erfindungsgemäßen Reibscheibe und
- Figur 3: in gleicher Darstellung eine zweite Ausführungsform.

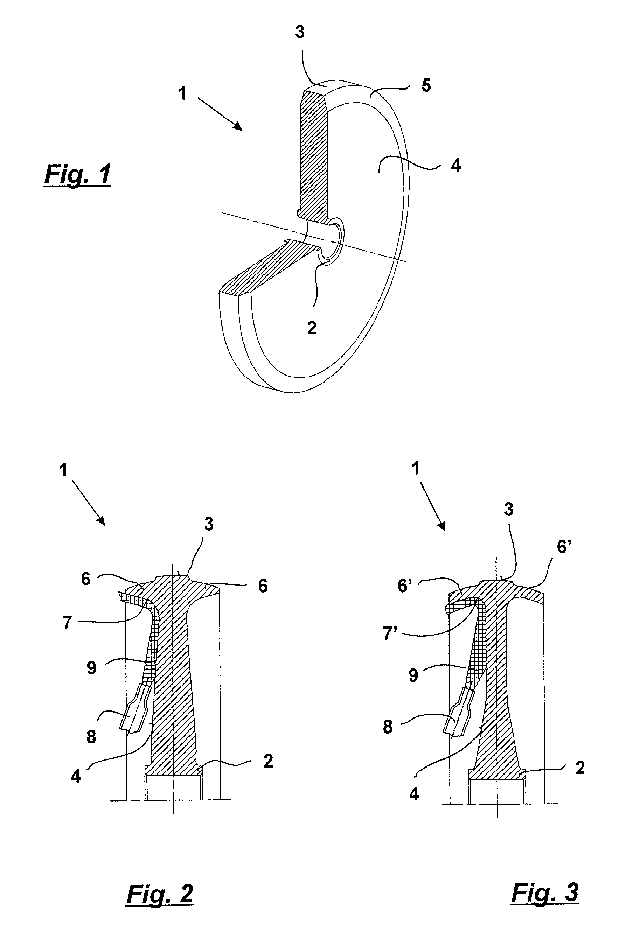

Eine Reibscheibe 1 nach **Figur 1** ist mit einer Nabe 2 in einem nicht näher dargestellten Träger drehbar gelagert. Der Träger und die Lagerung sind im Prinzip ähnlich ausgeführt wie in dem bereits erwähnten Stand der Technik nach der WO 97/37156. Die Reibscheibe 1 weist an ihrem äußeren Umfang eine Lauffläche 3 auf, mit der sie sich an den torusförmigen, konkaven Innenflächen von ebenfalls nicht dargestellten An- und Abtriebsscheiben eines Toroid-Reibradgetriebes abwälzt und über eine dazwischen angeordneten Traktionsflüssigkeit das Drehmoment von der Antriebsscheibe auf die Abtriebsscheibe überträgt. Wie Fig. 1 zeigt, ändert sich die Scheibendicke von der Nabe 2 zur Lauffläche 3 im Wesentlichen nicht. Lediglich der Übergangsbericht der Scheibenflanken 4 zur Lauffläche 3 ist bei 5 gefast.

Wird zur Kühlung der Lauffläche 3, wie in den **Figuren 2 und 3** weiter unten näher beschrieben, an die Scheibenflanke 4 Kühlmittel gespritzt, so wird dies durch die Fliehkraft der sich im Betrieb schnell drehenden Reibscheibe 1 zwar zur Lauffläche 3 transportiert. Durch die Abfassung wird es aber alsbald weggeschleudert, ohne im wesentlichen Umfang Wärme aufzunehmen.

Dies verhindern die Ausführung nach den **Figuren 2 und 3**. Hier sind beidseits zur Lauffläche 3 Rippen 6 bzw. 6' angeformt. Dabei sind die Rippen gegenüber der Lauffläche 3 zurückgesetzt. Dies hat den Vorteil einer gezielten Werkstoffbehandlung der im Betrieb hoch beanspruchten Lauffläche 3. Dabei können die Rippen 6 und 6', wie in den Figuren 2 und 3 gezeigt, durch einen Stufensprung zurückgesetzt sein, es ist aber ohne weiteres möglich, die Lauffläche stufenlos in die Rippenkontur übergehen zu lassen. Die Rippen 6, 6' sind ihren axialen Abmessungen so gewählt, dass wie ein Dach den eigentlichen Scheibenkörper überragen. Auf diese Weise bilden sich Hohlkehlen 7, 7' aus. Verstärkt werden diese Ausformungen durch einen sich zur Lauffläche hin radial verjüngenden Querschnitt des Scheibenkörpers.

Aus einer Düse 8 tritt ein der Kühlung der Lauffläche 3 dienender Ölstrahl 9 aus, der entlang der Scheibenflanke 4 nach oben in Richtung Lauffläche geführt und in der Hohlkehle 7 umgelenkt wird. Durch die Umlenkung staut sich der Ölstrahl für eine gewisse Zeit und kann in dieser Zeit zusätzlich Wärme der Reibscheibe 1, insbesondere im Bereich der Lauffläche 3 aufnehmen.

Dieser Effekt wird in Fig. 3 noch dadurch verstärkt, dass die Hohlkehle 7' als Hinterschneidung ausgeführt ist. Dadurch wird der Ölstrom 6 nicht nur umgelenkt, sondern seine Bewegungsrichtung wird im letzten Teilstück umgedreht, so dass er gegen die Fliehkraft fließen muss. Die Verweildauer des kühlenden Öls in der Hohlkehle 7' erhöht sich dadurch.

## Patentansprüche

1. Reibscheibe für ein Toroid-Reibradgetriebe, die in einem Variator das Drehmoment von einer Antriebsscheibe auf eine Abtriebsscheibe überträgt und sich hierzu mit einer stirnseitigen, im Betrieb gekühlten Lauffläche in den torusförmigen Hohlflächen der An- und Abtriebsscheiben abrollt, **dadurch gekennzeichnet, dass** an der Stirnseite der Reibscheibe (1) im Anschluss an die Lauffläche (3) wenigstens eine einseitige Rippe (6, 6') angeformt ist mit einer Hohlkehle (7, 7') an der der Lauffläche (3) abgewandten Rückseite und dass in die Hohlkehle (7, 7') Kühlmittel eingespritzt wird.

2. Reibscheibe nach Anspruch 1, **dadurch gekennzeichnet, dass** die Rippe (6, 6') gegenüber der Lauffläche (3) abgesetzt ist.

3. Reibscheibe nach Anspruch 1, **dadurch gekennzeichnet, dass** die Lauffläche stufenlos in die Rippe übergeht.

4. Reibscheibe nach einem der Ansprüche 1 bis 3, **dadurch gekennzeichnet, dass** die Rippe (6') an ihrer Rückseite eine Hinterschneidung aufweist.
